# EUROPÄISCHE PATENTSCHRIFT

(11) **EP 3 737 811 B1**
(45) Veröffentlichungstag und Bekanntmachung des Hinweises auf die Patenterteilung: **20.07.2022**
(21) Anmeldenummer: 18734747.1
(22) Anmeldetag: 12.06.2018
(51) Int. Cl.: E05C 3/04

(54) **GLEITSCHUH**
SLIDING BLOCK
PATIN

(30) Priorität: 09.01.2018 DE 202018100079 U
(43) Veröffentlichungstag der Anmeldung: 18.11.2020
(73) Patentinhaber: Ramsauer, Dieter, 58332 Schwelm (DE)
(72) Erfinder: Ramsauer, Dieter, 58332 Schwelm (DE)
(74) Vertreter: Cohausz & Florack
(86) Internationale Anmeldenummer: PCT/DE2018/100558
(87) Internationale Veröffentlichungsnummer: WO 2019/137571

(56) Entgegenhaltungen:
- EP-A1- 2 138 655
- DE-U1-202016 005 817
- DE-U1-202016 005 818

## Beschreibung

Die Erfindung betrifft einen Gleitschuh, insbesondere für Schließzungen von Beschlägen.

Die DE 20 2016 003 588 U1 offenbart ein Verschlusssystem, umfassend einen elektromechanischen Verschluss, insbesondere Schwenkhebel-, Drehriegel- oder Kompressionsverschluss, dessen Verriegelung durch ein durch eine Magnetspule oder Motor fließendes Stromsignal geöffnet werden kann. Zum Öffnen und Schließen kommt ein mit einer Schließzunge versehener Beschlag zum Einsatz.

Die DE 20 2016 005 817 U1 offenbart einen von Hand betätigbaren elektromechanischen Verschluss mit einer mechanischen Verriegelung, die die Handbetätigung blockiert, die aber elektronisch gelöst werden kann.

Die DE 20 2016 005 818 U1 offenbart eine Riegelanordnung, insbesondere Drehriegeleinrichtung oder Drehriegelspannverschluss mit auswertbarem Türkontakt, zur Ansteuerung einer Anzeigeeinrichtung, wie LED-Modul.

Weitere Verschlüsse, die mit Zungen in Wirkverbindung stehen, sind den Druckschriften DE 20 2014 009 753 U1, DE 20 2013 004 046 U1 sowie DE 20 2011 104 345 U1 zu entnehmen.

Derartige Verschlussmittel werden vielfach in Gehäusen oder Schränken, beispielsweise industriellen Gehäusen oder Schaltschränken, verbaut, wobei die Schließzunge im Verschlusszustand beispielsweise hinter einer Gegenfläche eines Schrank- oder Gehäuseelements greift.

Wie dem Stand der Technik zu entnehmen ist, kann ein derartiger Beschlag unterschiedlichste geometrische Konturen und Schließzungen aufweisen.

Allgemein bekannt ist, dass der Zungenbereich entweder mit einem Kunststofflack überzogen wird oder aber mehrteilig ausgebildete Steckelemente dort positioniert werden.

Kunststofflack weist den Nachteil auf, dass er bei ständigem Öffnen und Schließen des Schranks, respektive des Gehäuses, abgerieben wird und so seine geräuschdämpfende Gleitfähigkeits-Funktion einbüßt.

Aus der EP 2 138 655 A1 ist eine Schließzunge mit einem aufschiebbaren Schutzelement aus Kunststoff bekannt.

Mehrteilig ausgebildete Steckelemente sind hinsichtlich ihrer Montagehandhabung als problematisch anzusehen. Die Lagerhaltung wird darüber hinaus erhöht. Des Weiteren können Montageprobleme auftreten, da zweiteilige Steckelemente lageverdreht montiert werden.

Der Erfindung liegt die Aufgabe zugrunde, einen Gleitschuh, insbesondere für Schließzungen von Beschlägen, bereitzustellen, der die vorab aufgezeigten Nachteile nicht mehr beinhaltet.

Darüber hinaus soll ein Bauteil, insbesondere ein mit einer Schließzunge versehener Beschlag, bereitgestellt werden, dessen Schließvorgang durch Verbesserung der Gleiteigenschaften zwischen Hintergriffs-Fläche des Rahmens und Schließzunge erheblich verbessert ist.

Schließlich soll auch ein Gehäuse oder ein Schrank vorgeschlagen werden, der mit neuerungsgemäßen Beschlägen bestückt werden kann und dessen lackierte Hintergriffs-Fläche des Rahmens beim Schließvorgang nicht beschädigt wird.

Die Aufgabe wird gelöst durch einen einteilig ausgebildeten, aus Kunststoff bestehenden Gleitschuh, insbesondere für Schließzungen von Beschlägen, beinhaltend einen Bodenabschnitt, Wandabschnitte sowie einen Deckelabschnitt, wobei der Deckelabschnitt zur Bildung einer Eintrittsöffnung für ein damit in Wirkverbindung bringbares Bauteil einen Teilbereich des Bodenabschnitts übergreift und im Bereich des Gleitschuhs daran angeformte Rastmittel vorgesehen sind.

Vorteilhafte Weiterbildungen des erfindungsgemäßen Gleitschuhs sind den zugehörigen Unteransprüchen zu entnehmen.

Die Aufgabe wird auch gelöst durch ein Bauteil, insbesondere ein mit einer Schließzunge versehener Beschlag, wobei auf der Schließzunge ein Gleitschuh nach einem der Ansprüche 1 bis 14 lösbar aufsteckbar ist.

Vorteilhafte Weiterbildungen des erfindungsgemäßen Bauteils sind den zugehörigen Unteransprüchen zu entnehmen.

Die Aufgabe wird ebenfalls gelöst durch ein Gehäuse oder einen Schrank, insbesondere industrielles Gehäuse oder Schaltschrank, beinhaltend ein Bauteil, insbesondere einen Beschlag gemäß einem der Ansprüche 15 bis 17.

Der Gleitschuh beinhaltet somit einen starren, das freie Ende der Schließzunge aufnehmenden sowie einen federnd ausgebildeten, Teile der Schließzunge elastisch umgreifenden Abschnitt.

Infolge der gleitschuhseitig vorgesehenen Rastmittel wird die Schließzunge relativ zum Gleitschuh nach ihrer Montage lösbar verriegelt.

Der Gleitschuh ist somit unverlierbar mit der Schließzunge des Beschlags verbunden, kann jedoch später zu Recyclingzwecken problemlos von der Gleitzunge entfernt werden.

Je nach Ausgestaltung der Schließzunge kann der Bodenabschnitt des Gleitschuhs eine rechteckige oder quadratische Grundfläche aufweisen, wobei der Deckelabschnitt diese Grundfläche lediglich zu einem bestimmten Anteil, beispielsweise 10 bis 50 % der Länge der Grundfläche, übergreift.

Der Gleitschuh kann, einem weiteren Gedanken der Erfindung gemäß, aus einem thermoplastischen Kunststoff hergestellt werden.

Hier bietet sich bspw. Polyamid, beispielsweise PA6 an, wobei der Werkstoff mit einem vorgebbaren Anteil an Glasfasern versehen ist.

Sofern höhere Gleiteigenschaften oder schärfere Umweltbedingungen gegeben sind, kann alternativ auf Polyoxymethylen (POM) als Werkstoff zurückgegriffen werden, da dieser Werkstoff sich durch besonders günstige und geringe Reibungswerte auszeichnet.

Der Gleitschuh selber wird vorteilhafterweise als Spritzgussteil hergestellt.

Im Bereich der zugehörigen Stirnfläche des Bodenabschnitts weist der Gleitschuh - einem weiteren Gedanken der Erfindung gemäß - einen, sich zwischen Deckelabschnitt und Bodenabschnitt erstreckenden Steg auf. Dieser Steg kann im montierten Zustand als Anschlag für das freie Ende der Schließzunge des Beschlags eingesetzt werden.

Wie im Stand der Technik dargestellt, können Schließzungen von Beschlägen mit unterschiedlichen Konturen ausgebildet werden. Daran angepasst wird der jeweilige zum Einsatz gelangende Gleitschuh, so dass selbiger im Bereich seines Boden- und/oder Deckelabschnitts mit entsprechenden Profilen versehen wird.

Die Rastmittel sind - einem weiteren Gedanken der Erfindung gemäß - im Bereich des Deckelabschnitts vorgesehen und erstrecken sich, unter Bildung beispielsweise eines Wulstes, einer Hinterschneidung oder dergleichen, in Richtung des Bodenabschnitts. Im montierten Zustand hintergreifen die Rastmittel auf der Schließzunge vorgesehene Gegenprofile.

Alternativ besteht auch die Möglichkeit, die Rastmittel im Bereich der seitlichen Wandabschnitte vorzusehen. Die aufeinander zu gerichteten - bspw. als Wulst ausgebildeten - Rastmittel übergreifen im montierten Zustand des Beschlags Teilbereiche der Schließzunge.

Der nicht vom Deckelabschnitt übergriffene Bereich des Bodenabschnitts kann, unter Bildung von Schlitzen, federnd gestaltet werden, wobei in dem federnden Abschnitt Führungselemente für das Bauteil, respektive die Schließzunge, angeordnet sind.

Von Vorteil kann auch sein, den Gleitschuh breiter auszugestalten. Durch diese Maßnahme kann die Auflaufschräge nahezu verdoppelt werden, wodurch der Schließvorgang erheblich verbessert wird.

Im montierten Zustand wirken die Führungselemente mit seitlichen Wandbereichen der Schließzunge zusammen.

Ein mit einem Gehäuse oder Schrank, insbesondere einem industriellen Gehäuse oder einem Schaltschrank, zusammenwirkendes, einen Gleitschuh beinhaltendes Bauteil, insbesondere ein Beschlag, schützt nicht nur die Schließzunge, sondern hat darüber hinaus auch eine geräuschdämpfende Funktion.

Gegenüber dem Stand der Technik, insbesondere zweiteiligen Steckelementen, ergeben sich folgende Vorteile:
- vereinfachte Montage des Gleitschuhs auf der Schließzunge und somit Kostensenkung beim Kunden;
- geringe Fertigungskosten und damit Wettbewerbsvorteil;
- geringe Werkzeugkosten, da eines entfällt;
- geringe Lagerkosten und Vereinfachung der Verpackung;
- Fehlervermeidung beim Kunden, denn zweites Steckteil kann lageverkehrt montiert werden;
- einteiliger Gleitschuh, kein Montagefehler möglich.

Der Erfindungsgegenstand ist anhand eines Ausführungsbeispiels in der Zeichnung dargestellt und wird wie folgt beschrieben. Es zeigen:
- Figur 1: Prinzipskizze eines nur angedeuteten, mit einem Verschluss versehenen Schaltschranks in verschiedenen Positionen;
- Figuren 2a bis 2c: erfindungsgemäßer Gleitschuh in verschiedenen Ansichten bzw. Schnitten;
- Figur 3: Prinzipskizze des Montagevorgangs eines Gleitschuhs auf einer Schließzunge;
- Figur 4: montierter Zustand des Gleitschuhs auf der Schließzunge in verschiedenen Ansichten bzw. Schnitten;
- Figur 5: montierter Zustand des Gleitschuhs auf der Schließzunge in verschiedenen Ansichten bzw. Schnitten als Alternative zu Fig. 4;
- Figur 6: erfindungsgemäßer Gleitschuh als Alternative zu den Fig. 2a-2c;
- Figur 7: Gleitschuh gemäß Fig. 6 in verschiedenen räumlichen Ansichten;
- Figur 8: Prinzipskizze des Montagevorgangs des Gleitschuhs gemäß Fig. 6 bzw. 7.

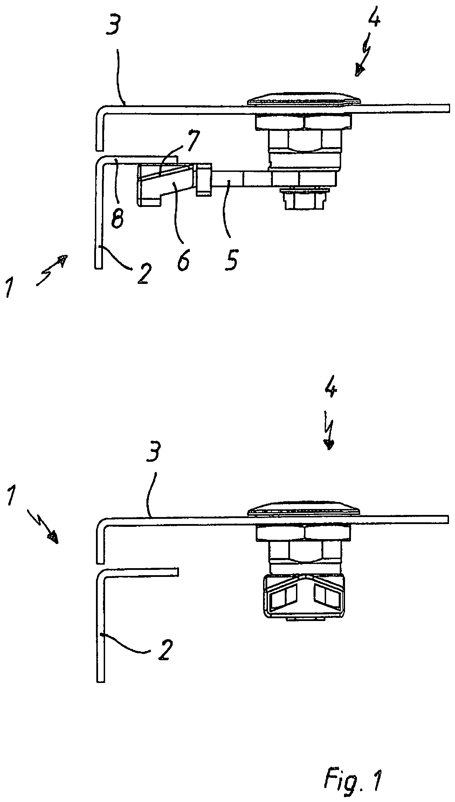

Figur 1 zeigt in angedeuteter Form einen Schaltschrank 1, wobei anstelle dieses Schaltschranks jeder beliebige Schrank oder auch ein Gehäuse angesprochen sein kann. Der Schaltschrank 1 beinhaltet einen Gehäusekörper 2 sowie eine Tür 3. Über ein geeignetes Verschlusssystem 4 kann die Tür 3 geöffnet oder geschlossen werden.

Das obere Bild der Figur 1 zeigt den geschlossenen Zustand der Tür 3, während das untere Bild der Figur 1 den geöffneten Zustand repräsentiert.

Mit dem Verschlusssystem 4 wirkt ein Beschlag 5 zusammen, der in seinem freien Endbereich in eine Schließzunge 6 ausläuft. Wie später noch eingehender beschrieben weist die Schließzunge 6 einen profilierten Abschnitt 7 auf, der unter Bildung einer Auflaufschräge hinter einen Wandabschnitt 8 des Gehäusekörpers 2 greift. Der Beschlag 5 soll in diesem Beispiel als länglicher Körper ausgebildet sein, wobei jedoch auch im Stand der Technik abgebildete Konturen denkbar sind.

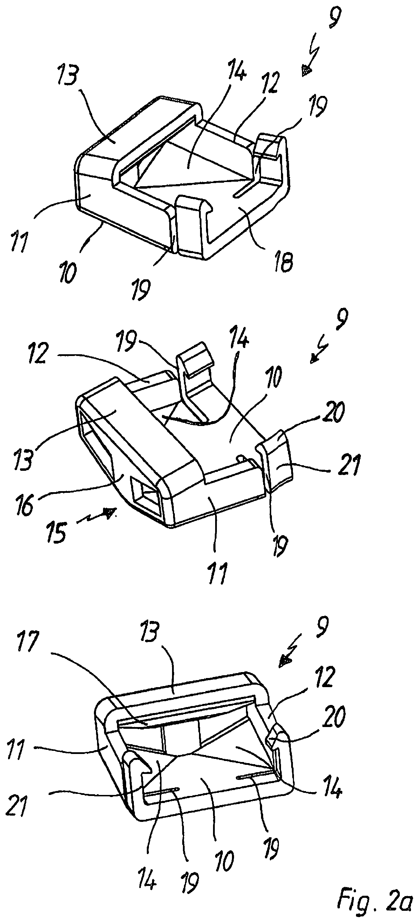

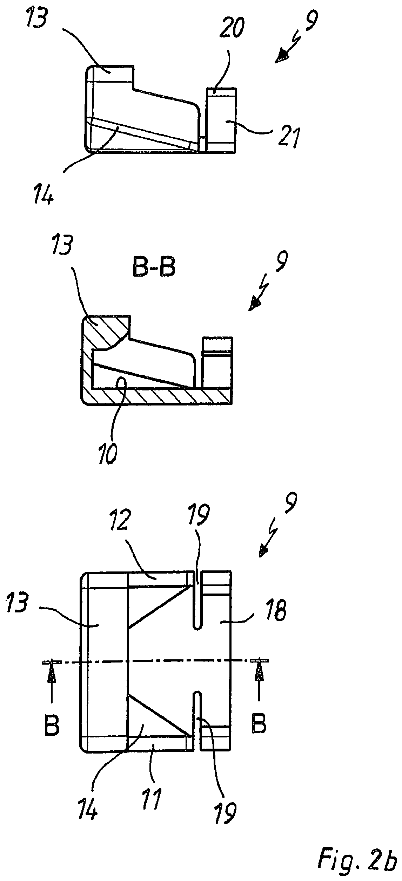

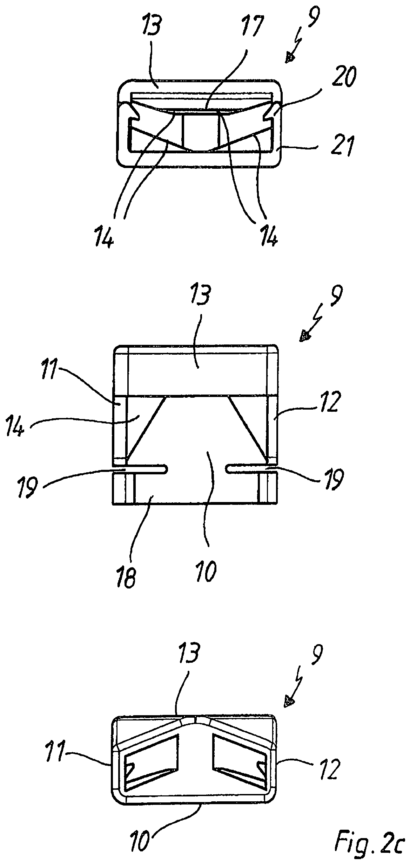

Die Figuren 2a bis 2c zeigen unterschiedliche Darstellungen bzw. Schnitte des erfindungsgemäßen Gleitschuhs 9. Der als Spritzgussteil ausgebildete Gleitschuh 9 besteht aus POM. Der Gleitschuh 9 ist einstückig ausgebildet und weist die folgenden Elemente auf:
einen Bodenabschnitt 10, seitliche Wandabschnitte 11,12 sowie einen Deckelabschnitt 13. Je nach Ausgestaltung der in Figur 1 dargestellten Schließzunge 6 ist der Bodenabschnitt 10 und/oder der Deckelabschnitt 13 mit geeigneten profilierten Bereichen 14 versehen. Im Bereich der den Deckelabschnitt 13 beinhaltenden Stirnfläche 15 des Bodenabschnitts 10 erstreckt sich zwischen Deckelabschnitt 13 und Bodenabschnitt 10 ein spritztechnisch angeformter Steg 16, der als Anschlag für die montierte Schließzunge 6 dienen kann. Deckelabschnittseitig sind in diesem Beispiel wulstförmig ausgebildete Rastmittel 17 vorgesehen, die sich in Richtung des Bodenabschnitts 10 erstrecken. Form und Ausgestaltung dieser Rastmittel 17 können beliebig sein und werden vom Fachmann an die jeweilige Profilform der Schließzunge 6 angepasst. Der erfindungsgemäße Gleitschuh 9 weist außerhalb des Deckelabschnitts 13 einen federnd ausgebildeten Führungsbereich 18 auf, wobei die Federwirkung durch im Bodenabschnitt 10 sowie den Wandabschnitten 11,12 eingebrachte Schlitze 19 erzeugt wird. Im federnd ausgebildeten Führungsbereich 18 sind mit Profilen 20 versehene Führungselemente 21 angeformt, die im montierten Zustand mit entsprechenden Wandabschnitten der Schließzunge 6 in Wirkverbindung bringbar sind.

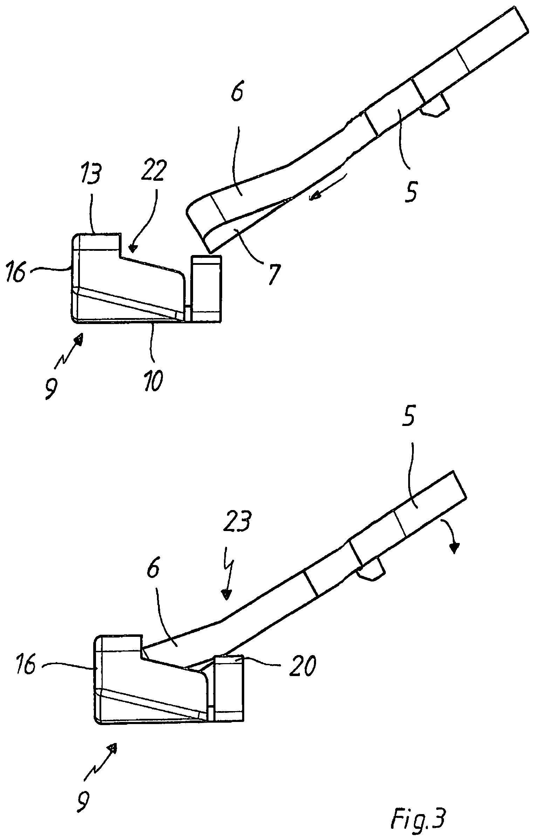

Figur 3 zeigt einen nur angedeuteten Montageschritt eines in Figur 1 dargestellten Beschlags 5. Erkennbar ist die mit einem profilierten Abschnitt (Anlaufprofil) 7 versehene Schließzunge 6 sowie der in den vorangegangenen Figuren beschriebene und dargestellte Gleitschuh 9. Die Schließzunge 6 des Beschlags 5 wird unter einem vorgebbarem Winkel in die zwischen Boden- 10 und Deckelabschnitt 13 gebildete Eintrittsöffnung 22 des Gleitschuhs 9 eingeführt, wobei der Beschlag 5, respektive die Schließzunge 6 relativ zum Gleitschuh 9 positioniert wird. Nach erfolgter Einführung der Schließzunge 6 in die Eintrittsöffnung 22, und zwar bis zum einen Anschlag bildenden Steg 16, kann der Beschlag 5 dann in Pfeilrichtung bewegt werden, so dass die federnd ausgebildeten Führungselemente 20 des federnd ausgebildeten Führungsbereichs 18 mit entsprechenden Wandabschnitten 23 der Schließzunge 6 in Wirkverbindung gebracht werden können.

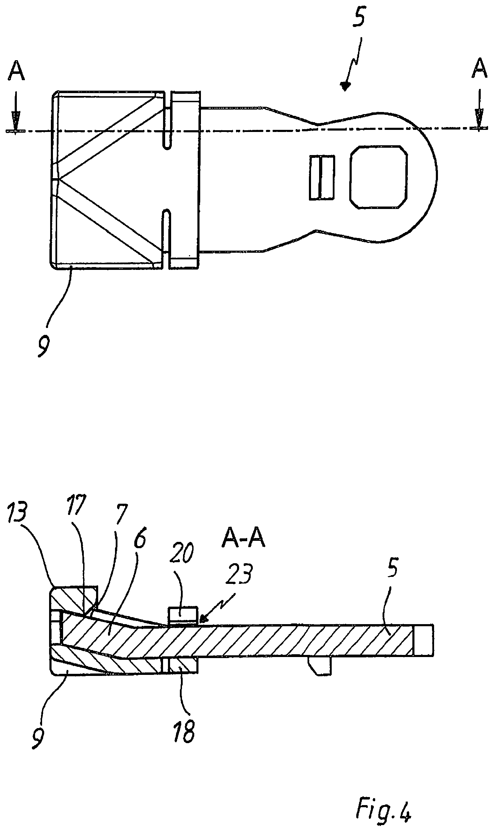

Figur 4 zeigt den montierten Zustand des Beschlags 5 in verschiedenen Ansichten bzw. Schnitten. Erkennbar ist neben dem Gleitschuh 9 noch die Schließzunge 6. Das durch einen Wulst oder eine Hinterschneidung gebildete Rastmittel 17 im Bereich des Deckelabschnitts 13 greift hinter das Profil 7 der Schließzunge 6, so dass in diesem Zustand eine lösbare Verbindung zwischen der Schließzunge 6 und dem Gleitschuh 9 hergestellt ist. Der federnd ausgebildete Führungsbereich 18, respektive die Führungselemente 20,21, liegen im montierten Zustand an den bereits angesprochenen Wandabschnitten 23 der Schließzunge 6 elastisch an.

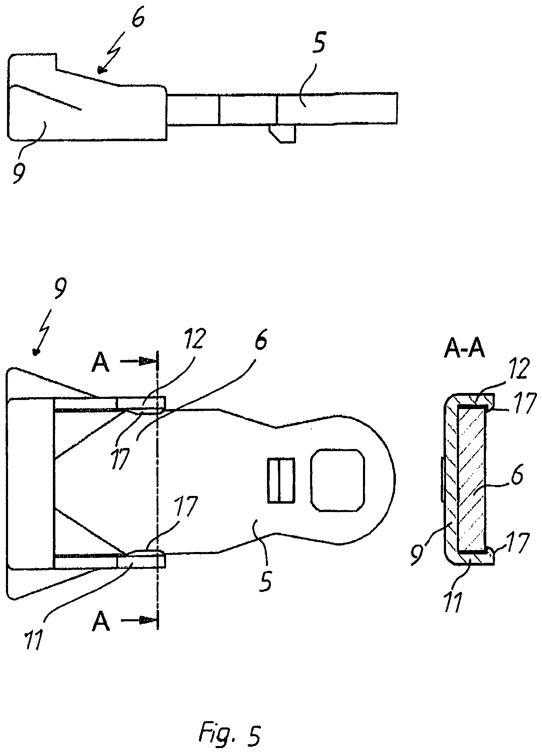

Die Figuren 5 bis 8 stellen eine alternative Ausgestaltung des in den vorangegangenen Figuren dargestellten Gleitschuhs 9 dar, so dass für gleiche Bauteile auch gleiche Bezugszeichen gelten.

Figur 5 zeigt den montierten Zustand des alternativen Gleitschuhs 9 auf einer Schließzunge 6 in verschiedenen Ansichten bzw. Schnitten. Wie bereits angesprochen ist die Schließzunge 6 Teil eines Beschlags 5.

Die Rastmittel 17 werden auch hier durch einen Wulst gebildet, sind jedoch abweichend zu den vorangegangenen Figuren nicht im Bereich des Deckelabschnitts sondern im Bereich der seitlichen Wandabschnitte 11, 12 vorgesehen.

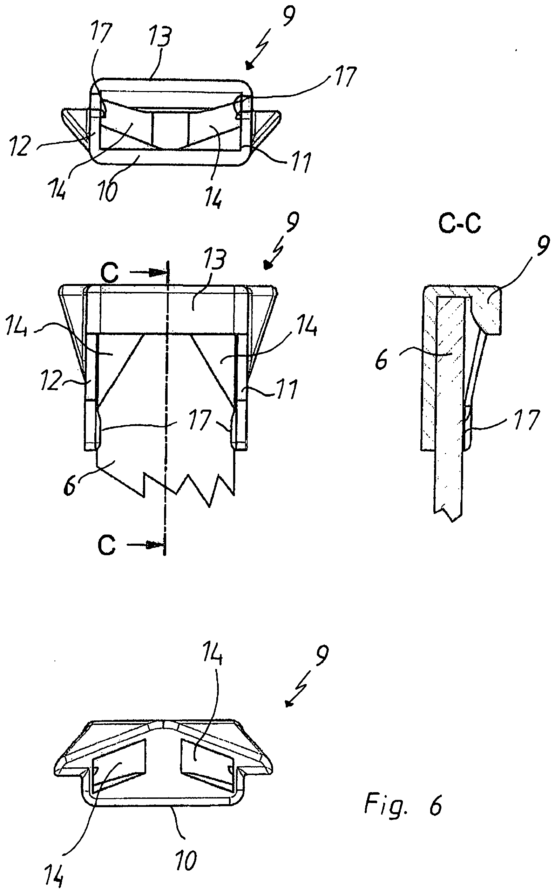

Figur 6 zeigt die alternative Ausgestaltung des erfindungsgemäßen Gleitschuhs 9 als Alternative zu den Figuren 2a bis 2c. Erkennbar sind folgende Elemente:
Der Bodenabschnitt 10, seitliche Wandabschnitte 11,12 sowie der Deckelabschnitt 13. Je nach Ausgestaltung der in Figur 5 dargestellten Schließzunge 6 ist der Bodenabschnitt 10 und/oder der Deckelabschnitt 13 mit geeigneten profilierten Bereichen 14 versehen. Die an den seitlichen Wandabschnitten 11, 12 vorgesehenen Rastmittel 17 übergreifen die Schließzunge 6 im montierten Zustand.

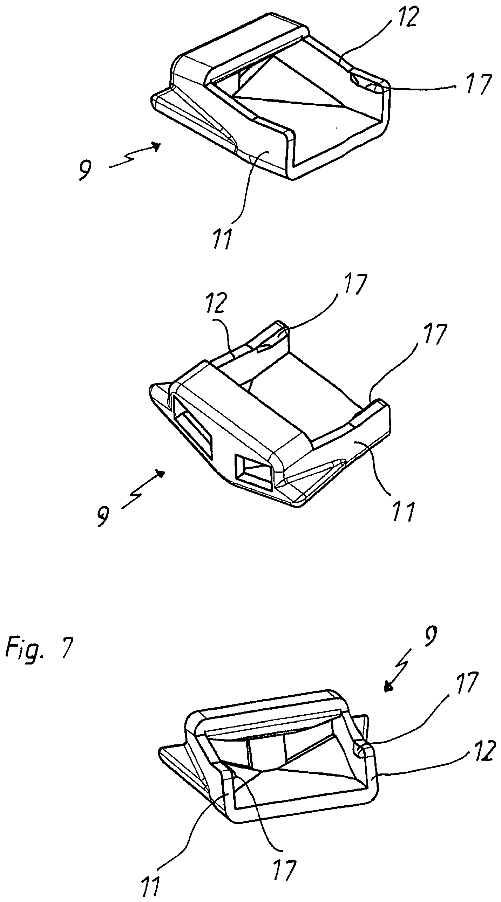

Figur 7 zeigt den Gleitschuh 9 gemäß Figur 6 in verschiedenen räumlichen Ansichten. Erkennbar sind die an den seitlichen Wandabschnitten 11, 12 vorgesehenen Rastmittel 17.

Die Figuren 5 bis 7 zeigen gegenüber den vorangehenden Figuren eine verbreiterte Version des Gleitschuhs 9. Damit ist der Vorteil verbunden, dass sich die Auflaufschräge nahezu verdoppelt, wodurch der Schließvorgang erheblich verbessert wird, insbesondere wenn eine Dichtung eingepresst werden soll.

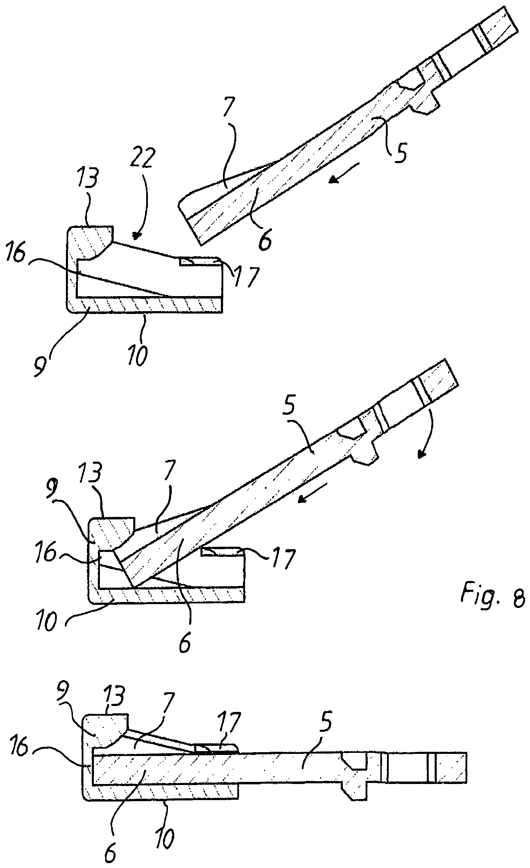

Figur 8 zeigt als Prinzipskizze den Montagevorgang des Gleitschuhs 9 gemäß Figuren 6 bzw. 7. Erkennbar ist die mit einem profilierten Abschnitt (Anlaufprofil) 7 versehene Schließzunge 6, die Teil eines Beschlags 5 ist. Die Schließzunge 6 des Beschlags 5 wird unter einem vorgebbaren Winkel in die zwischen Boden - 10 und Deckelabschnitt 13 gebildete Eintrittsöffnung 22 des Gleitschuhs 9 - eingeführt, wobei der Beschlag 5, respektive die Schließzunge 6, relativ zum Gleitschuh 9 positioniert wird. Nach erfolgter Einführung der Schließzunge 6 in die Eintrittsöffnung 22, und zwar bis zum einen Anschlag bildenden Steg 16, kann der Beschlag 5 dann in Pfeilrichtung bewegt werden. Nach Einbringung der Schließzunge 6 in den Gleitschuh 9 übergreifen die Rastmittel 17 die Schließzunge 6.

### Bezugszeichenliste

- 1: Schaltschrank
- 2: Gehäusekörper
- 3: Tür
- 4: Verschlusssystem
- 5: Beschlag
- 6: Schließzunge
- 7: profilierter Abschnitt (Anlaufprofil)
- 8: Wandabschnitt
- 9: Gleitschuh
- 10: Bodenabschnitt
- 11: Wandabschnitt
- 12: Wandabschnitt
- 13: Deckelabschnitt
- 14: profilierter Bereich
- 15: Stirnfläche
- 16: Steg
- 17: Rastmittel
- 18: Führungsbereich (federnd)
- 19: Schlitz
- 20: Profil
- 21: Führungselement
- 22: Eintrittsöffnung
- 23: Wandabschnitt Gleitzunge

## Patentansprüche

1. Einteilig ausgebildeter, aus Kunststoff bestehender, Gleitschuh (9), insbesondere für Schließzungen (6) von Beschlägen (5), beinhaltend einen Bodenabschnitt (10), Wandabschnitte (11,12) sowie einen Deckelabschnitt (13), wobei der Deckelabschnitt (13) zur Bildung einer Eintrittsöffnung (22) für ein damit in Wirkverbindung bringbares Bauteil (5) einen Teilbereich des Bodenabschnitts (10) übergreift und im Bereich des Gleitschuhs (9) daran angeformte Rastmittel (17)vorgesehen sind.

2. Gleitschuh nach Anspruch 1, **dadurch gekennzeichnet, dass** der Bodenabschnitt (10) eine rechteckige oder quadratische Grundfläche aufweist und der Deckelabschnitt (13) diese Grundfläche zu 10 bis 50 % der Länge der Grundfläche übergreift.

3. Gleitschuh nach Anspruch 1 oder 2, **dadurch gekennzeichnet, dass** der Deckelabschnitt (13) im Bereich der zugehörigen Stirnfläche (15) des Bodenabschnitts (10) mindestens einen, damit in Wirkverbindung stehenden Steg (16) aufweist.

4. Gleitschuh nach einem der Ansprüche 1 bis 3, **dadurch gekennzeichnet, dass** der Bodenabschnitt (10) und/oder der Deckelabschnitt (13) mit profilierten Bereichen (14) versehen ist.

5. Gleitschuh nach einem der Ansprüche 1 bis 4, **dadurch gekennzeichnet, dass** die profilierten Bereiche (14), zumindest des Bodenabschnitts (10), an eine Gegenkontur (7) des Bauteils (5) angepasst sind.

6. Gleitschuh nach einem der Ansprüche 1 bis 5, **dadurch gekennzeichnet, dass** das bzw. die Rastmittel (17) im Bereich des Deckelabschnitts (13) vorgesehen ist bzw. sind und sich, unter Bildung eines Wulstes oder einer Hinterschneidung, in Richtung des Bodenabschnitts (10) erstreckt.

7. Gleitschuh nach einem der Ansprüche 1 bis 5, **dadurch gekennzeichnet, dass** das bzw. die Rastmittel (17) im Bereich der seitlichen Wandabschnitte (11, 12) vorgesehen ist bzw. sind.

8. Gleitschuh nach einem der Ansprüche 1 bis 7, **dadurch gekennzeichnet, dass** der nicht vom Deckelabschnitt (13) übergriffene Bereich des Bodenabschnitts (10) mit Führungselementen (20,21) für das Bauteil (5) versehen ist.

9. Gleitschuh nach einem der Ansprüche 1 bis 8, **dadurch gekennzeichnet, dass** im Bereich der außerhalb des Deckelabschnitts (13) vorgesehenen freien Stirnfläche des Bodenabschnitts (10) ein federnder, die Führungselemente (21) aufnehmender Führungsbereich (18) vorgesehen ist.

10. Gleitschuh nach einem der Ansprüche 1 bis 9, **dadurch gekennzeichnet, dass** der federnd ausgebildete Führungsbereich (18) durch im Bodenabschnitt (10) eingebrachte Schlitze (19) gebildet ist.

11. Gleitschuh nach einem der Ansprüche 1 bis 10, **dadurch gekennzeichnet, dass** der Gleitschuh (9) aus einem thermoplastischen Kunststoff besteht.

12. Gleitschuh nach Anspruch 11, **dadurch gekennzeichnet, dass** der Gleitschuh aus Polyoxymethylen (POM) bsteht.

13. Gleitschuh nach Anspruch 11, **dadurch gekennzeichnet, dass** der Gleitschuh (9) aus Polyamid, insbesondere aus einem mit einem vorgebbaren Glasfaseranteil versehenen Polyamid, besteht.

14. Gleitschuh nach einem der Ansprüche 1 bis 13, **dadurch gekennzeichnet, dass** der Gleitschuh (9) als Spritzgussteil ausgebildet ist.

15. Bauteil, nämlich mit einer Schließzunge (6) versehener Beschlag (5), wobei auf der Schließzunge (6) ein Gleitschuh (9) nach einem der Ansprüche 1 bis 14 lösbar aufgesteckt ist.

16. Bauteil nach Anspruch 15, **dadurch gekennzeichnet, dass** die Schließzunge (6) im Bereich ihres freien Endes mit einem vorgebbaren profilierten Abschnitt (7) versehen ist, dass der Gleitschuh (9) mit einem entsprechenden Gegenprofil (14) versehen ist und dass die lösbare Verbindung zwischen Gleitschuh (9) und Schließzunge (6) durch am Gleitschuh (9) vorgesehene Rastmittel (17) herbeiführbar ist.

17. Bauteil nach Anspruch 15 oder 16, **dadurch gekennzeichnet, dass** die am Gleitschuh (9) angeformten Führungselemente (20, 21) mit seitlichen Wandbereichen (23) der Schließzunge (6) in Wirkverbindung bringbar sind.

18. Gehäuse oder Schrank, insbesondere industrielles Gehäuse oder Schaltschrank, beinhaltend ein Bauteil gemäß einem der Ansprüche 15 bis 17.

## Claims

1. One-piece sliding block (9) consisting of plastic, in particular for locking tongues (6) of fittings (5), comprising a base portion (10), wall portions (11, 12) and a cover portion (13), wherein the cover portion (13) overlaps a subregion of the base portion (10) so as to form an insert opening (22) for a component (5) that can be operatively connected therewith, and wherein latching means (17) which are moulded onto the cover portion are provided in the region of the sliding block (9).

2. Sliding block according to claim 1, **characterised in that** the base portion (10) has a rectangular or square base area and the cover portion (13) overlaps this base area by 10 to 50% of the length of the base area.

3. Sliding block according to claim 1 or 2, **characterised in that** the cover portion (13), in the region of the associated end face (15) of the base portion (10), has at least one web (16) which is operatively connected thereto.

4. Sliding block according to any one of claims 1 to 3, **characterised in that** the base portion (10) and/or the cover portion (13) is provided with profiled regions (14).

5. Sliding block according to any one of claims 1 to 4, **characterised in that** the profiled regions (14), at least of the base portion (10), are adapted to a counter-contour (7) of the component (5).

6. Sliding block according to any one of claims 1 to 5, **characterised in that** the latching means (17) is or are provided in the region of the cover portion (13) and extends, forming a bead or undercut, in the direction of the base portion (10).

7. Sliding block according to any one of claims 1 to 5, **characterised in that** the latching means (17) is or are provided in the region of the lateral wall portions (11,12).

8. Sliding block according to any one of claims 1 to 7, **characterised in that** the region of the base portion (10) which is not overlapped by the cover portion (13) is provided with guide elements (20, 21) for the component (5).

9. Sliding block according to any one of claims 1 to 8, **characterised in that**, in the region of the free end face of the base portion (10) provided outside the cover portion (13), a resilient guide region (18) receiving the guide elements (21) is provided.

10. Sliding block according to any one of claims 1 to 9, **characterised in that** the resiliently designed guide region (18) is formed by slots (19) made in the base portion (10).

11. Sliding block according to any one of claims 1 to 10, **characterised in that** the sliding block (9) consists of a thermoplastic plastic.

12. Sliding block according to claim 11, **characterised in that** the sliding block consists of polyoxymethylene (POM).

13. Sliding block according to claim 11, **characterised in that** the sliding block (9) consists of polyamide, in particular of a polyamide provided with a predeterminable glass fibre content.

14. Sliding block according to any one of claims 1 to 13, **characterised in that** the sliding block (9) is designed as an injection-moulded part.

15. Component, namely fitting (5) provided with a locking tongue (6), wherein a sliding block (9) according to any one of claims 1 to 14 is be releasably attached to the locking tongue (6).

16. Component according to claim 15, **characterised in that** the locking tongue (6) is provided in the region of its free end with a predeterminable profiled portion (7), **in that** the sliding block (9) is provided with a corresponding counter-profile (14) and **in that** the releasable connection between the sliding block (9) and the locking tongue (6) can be brought about by latching means (17) provided on the sliding block (9).

17. Component according to claim 15 or 16, **characterised in that** the guide elements (20, 21) moulded onto the sliding block (9) can be operatively connected to lateral wall regions (23) of the locking tongue (6).

18. Housing or cabinet, in particular industrial housing or control cabinet, comprising a component according to any one of claims 15 to 17.

## Revendications

1. Patin (9) formé d'une seule pièce et étant en matière synthétique, notamment pour des languettes de fermeture (6) de garnitures (5), comportant une section de fond (10), des sections de paroi (11, 12) ainsi qu'une section de couvercle (13), où la section de couvercle (13) recouvre une zone partielle de la section de fond (10) pour former une ouverture d'entrée (22) pour un composant (5) pouvant être amené en liaison active avec celle-ci, et où, dans la zone du patin (9), des moyens d'encliquetage (17) étant formés sur celui-ci sont prévus.

2. Patin selon la revendication 1, **caractérisé en ce que** la section de fond (10) présente une surface de base rectangulaire ou carrée et la section de couvercle (13) recouvre cette surface de base sur 10 à 50 % de la longueur de la surface de base.

3. Patin selon la revendication 1 ou 2, **caractérisé en ce que** la section de couvercle (13) présente, dans la zone de la surface frontale (15) associée de la section de fond (10), au moins une passerelle (16) en liaison active avec celle-ci.

4. Patin selon l'une des revendications 1 à 3, **caractérisé en ce que** la section de fond (10) et/ou la section de couvercle (13) est prévu avec des zones profilées (14).

5. Patin selon l'une des revendications 1 à 4, **caractérisé en ce que** les zones profilées (14), au moins de la section de fond (10), sont adaptées à un contre-profil (7) du composant (5).

6. Patin selon l'une des revendications 1 à 5, **caractérisé en ce que** le ou les moyen(s) d'encliquetage (17) est prévu ou sont prévus dans la zone de la section de couvercle (13), et s'entend ou s'étendent, en formant un bourrelet ou une contre-dépouille, en direction de la section de fond (10).

7. Patin selon l'une des revendications 1 bis 5, **caractérisé en ce que** le ou les moyen(s) d'encliquetage (17) est prévu ou sont prévus dans la zone des sections de paroi (11, 12) latérales.

8. Patin selon l'une des revendications 1 bis 7, **caractérisé en ce que** la zone de la section de fond (10) non recouverte par la section de couvercle (13) est pourvue d'éléments de guidage (20, 21) pour le composant (5).

9. Patin selon l'une des revendications 1 bis 8, **caractérisé en ce qu'**une zone de guidage (18) à effet ressort logeant les éléments de guidage (21) est prévue dans la zone de la surface frontale libre de la section de fond (10) qui est prévue à l'extérieur de la section de couvercle (13).

10. Patin selon l'une des revendications 1 à 9, **caractérisé en ce que** la zone de guidage (18) à effet ressort est formée par des fentes (19) réalisée dans la section de fond (10).

11. Patin selon l'une des revendications 1 bis 10, **caractérisé en ce que** le patin (9) est composé d'une matière synthétique thermoplastique.

12. Patin selon la revendication 11, **caractérisé en ce que** le patin est composé de polyoxyméthylène (POM).

13. Patin selon la revendication 11, **caractérisé en ce que** le Patin (9) est composé de polyamide, notamment d'un polyamide doté d'une proportion de fibres de verre prédéterminée.

14. Patin selon l'une des revendications 1 à 13, **caractérisé en ce que** le patin (9) est conçu en tant que pièce moulée par injection.

15. Composant, à savoir une garniture (5) munie d'une languette de fermeture (6), un patin (9) selon l'une des revendications de 1 à 14 étant enfilé de manière amovible sur la languette de fermeture (6).

16. Composant selon la revendication 15, **caractérisé en ce que** la languette de fermeture (6) est munie, dans la zone de son extrémité libre, d'une section profilée (7) prédéterminée, **en ce que** le patin (9) est muni d'un contre-profil (14) correspondant et **en ce que** la connexion amovible entre le patin (9) et la languette de fermeture (6) est susceptible d'être causée par des moyens d'encliquetage (17) prévus au niveau du patin (9).

17. Composant selon la revendication 15 ou 16, **caractérisé en ce que** les éléments de guidage (20, 21) formés au niveau du patin (9) sont susceptibles d'être amenés en liaison active avec des zones de paroi (23) latérales de la languette de fermeture (6).

18. Boîtier ou armoire, notamment boîtier industriel ou armoire de commande, comprenant un composant selon l'une des revendications 15 à 17.
